# EUROPÄISCHE PATENTANMELDUNG

(11) **EP 4 389 395 A1**
(43) Veröffentlichungstag der Anmeldung: **26.06.2024**
(21) Anmeldenummer: 23184726.0
(22) Anmeldetag: 11.07.2023
(51) Int. Cl.: B29C 64/10, B22F 10/00, B22F 10/60, B27N 5/00, B29C 33/00, B29C 64/188, B33Y 10/00, B33Y 40/20, B33Y 80/00

(54) **VERFAHREN ZUM HERSTELLEN VON FORM- UND/ODER TROCKENMODULEN FÜR DIE HERSTELLUNG VON FASERN UMFASSENDEN BEHÄLTERN, VERFAHREN UND VORRICHTUNG ZUM HERSTELLEN EINES FASERN UMFASSENDEN BEHÄLTERS UNTER VERWENDUNG EINES FORM- UND/ODER TROCKENMODULS**

(30) Priorität: 20.12.2022 DE 102022134093
(71) Anmelder: KRONES Aktiengesellschaft, 93073 Neutraubling (DE)
(72) Erfinder: ZACHARIAS, Dr. Joerg, Neutraubling (DE); GROSSER, Dr. Angelika, Neutraubling (DE); AUMER, Robert, Neutraubling (DE); HIPPEL, Andreas, Neutraubling (DE); SCHINDLER, Florian, Neutraubling (DE)
(74) Vertreter: Grünecker Patent- und Rechtsanwälte PartG mbB

(57) **Zusammenfassung**

Die Erfindung betrifft ein Verfahren zum Herstellen von Form- und/oder Trockenmodulen für die Herstellung von Fasern umfassenden Behältern mittels der Form- und/oder Trockenmodule, wobei das Verfahren ein Herstellen eines Form- und/oder Trockenmoduls (14) umfasst, wobei mindestens ein Teil des Form- und/oder Trockenmoduls mittels einem additiven Fertigungsverfahren, beispielsweise mittels 3D-Druck, hergestellt wird. Weiter betrifft die Erfindung eine Vorrichtung zum Ausführen des Verfahrens zum Herstellen von Form- und/oder Trockenmodulen für die Herstellung von Fasern umfassenden Behältern, ein Form- und/oder Trockenmodul hergestellt mittels dieses Verfahrens, ein Verfahren zum Herstellen eines Fasern umfassenden Behälters unter Verwendung eines Form- und/oder Trockenmoduls, das mittels des Verfahrens zum Herstellen von Form- und/oder Trockenmodulen für die Herstellung von Fasern umfassenden Behältern hergestellt wurde, und eine Vorrichtung zum Herstellen von Fasern umfassenden Behältern unter der Verwendung von faserhaltigen Pulpe, wobei die Vorrichtung ein oder mehrere der Form- und/oder Trockenmodul umfasst.

## Beschreibung

Die Erfindung betrifft ein Verfahren zum Herstellen von Form- und/oder Trockenmodulen für die Herstellung von Fasern umfassenden Behältern, eine Vorrichtung zum Ausführen des Verfahrens, ein Form- und/oder Trockenmodul, ein Verfahren zum Herstellen eines Fasern umfassenden Behälters unter Verwendung eines Form- und/oder Trockenmoduls und eine Vorrichtung zum Herstellen von Fasern umfassenden Behältern unter der Verwendung von faserhaltigen Pulpe, wobei die Vorrichtung ein oder mehrere Form- und/oder Trockenmodul umfasst, gemäß den unabhängigen Ansprüchen.

### Stand der Technik

WO 2016/055073A1 offenbart die Verwendung einer mehrteiligen Form zum Ausformen von Behältern unter der Verwendung von Pulpe. Beispielsweise kann die Form zwei Hälften umfassen, die eine erste Kavität zum Einbringen der Pulpe und eine zweite Kavität zur Aufnahme und zum Weiterleiten von Wasser, das aus der Pulpe ausgepresst wurde, zu einem Ausgang. Die mehrteilige Form kann aus Polymer, Keramik oder Metall, wie beispielsweise Aluminium bestehen.

Es kann fertigungstechnisch schwierig sein, die teilweise komplex strukturierte Form zum Ausformen von Behältern, unter der Verwendung von Pulpe, mittels Dreh- und Frästeilen oder durch Tiefziehen herzustellen.

Bei einer Variation der Geometrie des herzustellenden Behälters bedeutet das zudem, dass es erforderlich ist, den aufwendigen Fertigungsprozess neu zu starten, um eine für die Variation der Geometrie passende Form herzustellen.

### Aufgabe

Die Aufgabe der Erfindung ist es, ein Verfahren zum Herstellen von Form- und/oder Trockenmodulen für die Herstellung von Fasern umfassenden Behältern, eine Vorrichtung zum Ausführen des Verfahrens, ein Form- und/oder Trockenmodul, ein Verfahren zum Herstellen eines Fasern umfassenden Behälters unter Verwendung eines Form- und/oder Trockenmoduls und eine Vorrichtung zum Herstellen von Fasern umfassenden Behältern unter der Verwendung von faserhaltigen Pulpe, wobei die Vorrichtung ein oder mehrere Form- und/oder Trockenmodul umfasst zur Verfügung zu stellen, die eine erhöhte Funktionalität bieten.

### Lösung

Die Aufgabe wird gelöst durch das Verfahren zum Herstellen von Form- und/oder Trockenmodulen für die Herstellung von Fasern umfassenden Behältern, die Vorrichtung zum Ausführen des Verfahrens, das Form- und/oder Trockenmodul, das Verfahren zum Herstellen eines Fasern umfassenden Behälters unter Verwendung eines Form- und/oder Trockenmoduls und die Vorrichtung zum Herstellen von Fasern umfassenden Behältern unter der Verwendung von faserhaltigen Pulpe, wobei die Vorrichtung ein oder mehrere Form- und/oder Trockenmodul umfasst, gemäß den unabhängigen Ansprüchen. Weitere Ausführungsformen sind in den Unteransprüchen offenbart.

Das erfindungsgemäße Verfahren zum Herstellen von Form- und/oder Trockenmodulen für die Herstellung von Fasern umfassenden Behältern mittels der Form- und/oder Trockenmodule umfasst ein Herstellen eines Form- und/oder Trockenmoduls, wobei mindestens ein Teil des Form- und/oder Trockenmoduls mittels einem additiven Fertigungsverfahren, beispielsweise mittels 3D-Druck, hergestellt wird.

Das additive Fertigungsverfahren kann ein pulverbasiertes Verfahren umfassen, wie beispielsweise ein selektives Laserschmelzen.

Als additives Fertigungsverfahren kann jegliches additives Fertigungsverfahren verwendet werden.

Ein Formmodul kann zum Ausformen eines Fasern umfassenden Behälters verwendet werden. Ein Trockenmodul kann zum Trocknen eines/des ausgeformten Fasern umfassenden Behälters verwendet werden. Hierbei kann es sich um zwei Module handeln.

Es kann auch vorgesehen sein, dass ein einziges Form- und/oder Trockenmodul verwendet werden kann, in dem erst ein Ausformen eines Fasern umfassenden Behälters und dann (im gleichen Modul) ein Trocknen des zuvor ausgeformten Fasern umfassenden Behälters erfolgen kann.

Die innere Oberfläche des Form- und/oder Trockenmoduls kann einer Außenkontur eines herzustellenden, Fasern umfassenden Behälters entsprechen oder im Wesentlichen entsprechen. Der herzustellende Behälter kann eine Flasche (mit oder ohne Gewinde), eine Dose oder dergleichen sein.

Eine äußere Oberfläche des Form- und/oder Trockenmoduls kann Haltevorrichtungen und/oder Ösen umfassen. Eine äußere Oberfläche kann für Form- und/oder Trockenmodule, die verschiedene innere Oberflächen aufweisen, beispielsweise jeweils gleich ausgebildet sein. So kann eine Art von Gehäuse für unterschiedliche Form- und/oder Trockenmodule verwendet werden. Die eine Art von Gehäuse kann eine technisch einfachere Verwendung ermöglichen, da eine Infrastruktur nicht für verschiedene Arten von Gehäusen zur Verfügung gestellt werden braucht.

Das Form- und/oder Trockenmodul und/oder eine Außengeometrie des Form- und/oder Trockenmoduls und/oder ein Gehäuse für das Form- und/oder Trockenmoduls und/oder eine Außengeometrie des Gehäuses können derart ausgeführt sein, dass sie ähnlich der Funktionalität der Flaschenformen einer PET-Blasmaschine ausgebildet sein können.

Das Form- und/oder Trockenmodul kann eine Stützstruktur umfassen. Die Stützstruktur kann wie das Form- und/oder Trockenmodul mittels 3D-Druck hergestellt werden. Beispielsweise kann die Stützstruktur in einem Formmodul angeordnet werden, um eine Entwässerung der in das Formmodul eingebrachte faserhaltige Pulpe zu unterstützen. Die Stützstruktur kann Poren und/oder Durchgänge und/oder Kanäle, oder eine Matrix mit Poren und/oder Durchgängen und/oder Kanälen umfassen. Beispielsweise kann die Stützstruktur als Stütze für ein Sieb dienen, an dem sich eingebrachte faserhaltige Pulpe anlagern kann. Eine Maschenweite der Stützstruktur kann derart vorgesehen werden, dass ein optimales Verhältnis zwischen einer Faserlänge und/oder Faserlängenverteilung einer für die Herstellung eines Fasern umfassenden Behälters verwendeten faserhaltigen Pulpe und einer Porengröße des Form- und/oder Trockenmoduls einstellbar sein kann.

Die Fasern können Lignin, Bananenblätter und/oder Chinin umfassen. Die Fasern können beispielsweise Zellulosefasern, Fasern von Nadelhölzern, Blattgehölzen und/oder Platanen und/oder von Gräsern, Schilf und/oder Bambus oder dergleichen umfassen. Die Fasern können Seidenfäden, Spinnenfäden, Algen, natürliche Fasern (wie Donau-Silphie-Fasern, Hanf, Mais, Baumwolle), Bananenschalen, Orangenschalen, Gras, Stroh, Kartoffelstärke oder aufbereiteten Kuhdung umfassen. Auch können Zellstofffasern vorgesehen sein, die einem Prozess entstammen, durch den sie künstlich gezüchtet wurden. Diese alternativen Materialien können bei Materialengpässen von Holz als Grundstoff für eine fluide Masse mit Fasern, den Grundstoff vollständig oder teilweise ersetzen.

Die Fasern können Fasermischungen aus holzfremden Material, beispielsweise Baumwolle, Hanf, und/oder Textilfasern umfassen.

Beispielsweise können die Fasern Viskosefasern umfassen. Eine Viskosefaser ist eine künstliche Faser aus regenerierter Zellulose, wobei die Viskosefasern als Ausgangsbasis 100% Zellulose haben, die in einem mehrstufigen Verfahren behandelt wird. Die Viskosefasern können eine flache oder kabelförmige Struktur, eine trilobale Form oder eine doppelt trilobale Struktur umfassen. Die Fasern können eine flächige oder hohle Struktur oder eine geriffelte oder raue äußere Oberfläche umfassen.

Es können auch verschiedenartige Fasern in Kombination verwendet werden. Beispielsweise können Fasern mit unterschiedlichen äußeren Oberflächen und/oder Formen und/oder hohler Struktur und/oder flächiger Struktur und/oder aus verschiedenen Materialien kombiniert werden. Die Fasern können dabei ursprünglich, glatt, geschnitten, gemahlen oder fibrilliert sein.

Durch den natürlichen Ursprung der Fasern können diese biologisch abbaubar sein. Zudem sind sie nachhaltig und nachwachsend.

Die Fasern können in einer Pulpe verwendet werden. Die Pulpe kann als faserhaltige Pulpe bezeichnet werden. Die Pulpe kann eine Mischung aus Wasser, beispielsweise mit Additiven, und Fasern sein oder umfassen. Die Pulpe kann beispielsweise für die Herstellung der Fasern umfassenden Behälter verwendet werden. Die Pulpe kann in die Form- und/oder Trockenmoduls eingebracht werden, die mittels 3D-Druck hergestellt wurden.

Für den 3D-Druck kann ein Metall oder Metallgemisch verwendet werden, beispielsweise Stahl, Edelstahl oder Aluminium. Bei einer Wahl des Materials, das für den 3D-Druck verwendet wird, kann darauf geachtet werden, dass die mit und aus ihm hergestellten Form- und/oder Trockenmodule eine vorgegebene Festigkeit und/oder Temperaturbeständigkeit erreichen können. Zudem können Metall oder Metallgemisch neben ihrer mechanischen Belastbarkeit auch hinsichtlich ihrer hygienischen Eignung, beispielsweise durch Reinigung mit Laugen, Säuren oder Oxidationsmitteln, beständig sein.

Für den 3D-Druck kann ein Kunststoff verwendet werden. Bei der Wahl des Kunststoffs, der für den 3D-Druck verwendet wird, kann darauf geachtet werden, dass die mit und aus ihm hergestellten Form- und/oder Trockenmodule eine vorgegebene Festigkeit und/oder Temperaturbeständigkeit erreichen können.

Das Herstellen des Form- und/oder Trockenmoduls mittels 3D-Druck kann derart erfolgen, dass das Form- und/oder Trockenmodul eine Anpressdruckbeständigkeit von 0,01 bar bis 10 bar oder bis 40 bar aufweisen kann. Um diese Anpressdruckbeständigkeit erreichen zu können, können das für den 3D-Druck verwendete Material, eine Wanddickenverteilung des Form- und/oder Trockenmodul und/oder eine Porosität des Form- und/oder Trockenmoduls berücksichtigt werden.

Das Herstellen des Form- und/oder Trockenmoduls mittels 3D-Druck kann derart erfolgen, dass das Form- und/oder Trockenmodul eine Temperaturbeständigkeit von mindestens 200°C oder mindestens 300°C aufweisen kann. Um diese Temperaturbeständigkeit erreichen zu können, können das für den 3D-Druck verwendete Material, eine Wanddickenverteilung des Form- und/oder Trockenmodul und/oder eine Porosität des Form- und/oder Trockenmoduls berücksichtigt werden.

Das Herstellen des Form- und/oder Trockenmoduls mittels 3D-Druck kann derart erfolgt, dass das Form- und/oder Trockenmodul Poren mit einer Porengröße von 0,1 µm bis 1 mm, beispielsweise von 0,3 mm bis 0,7 mm aufweisen kann. Die Grenzwerte dieser Wertebereiche können miteingeschlossen sein. Durch die Poren kann überschüssiges Wasser aus einer faserhaltigen Pulpe abfließen, die in das Form- und/oder Trockenmodul eingebracht wurde, um einen Fasern umfassenden Behälter herzustellen.

Das Verfahren kann weiter eine Nachbearbeitung einer inneren Oberfläche des Form- und/oder Trockenmoduls zum Glätten der inneren Oberfläche umfassen. Beispielsweise kann die Nachbearbeitung ein Schleifen, Bürsten, Honen, Beizen oder E-Polieren umfassen. Dadurch kann ein in dem Form- und/oder Trockenmodul hergestellter Fasern umfassender Behälter eine entsprechend glattere Oberfläche aufweisen und/oder nach der Herstellung in dem Form- und/oder Trockenmodul leichter aus ihm ausgelöst werden. Die Nachbearbeitung kann einen oder mehrere Punkte der folgenden Liste umfassen:
- Spanen mit geometrisch bestimmtem Schneiden (z. B. Drehen, Bohren, Fräsen),
- Spanen mit geometrisch unbestimmtem Schneiden (z. B. Schleifen, Honen, Läppen),
- thermischen Verfahren (z. B. Funkenerodieren (Drahterodieren, Senkerodieren),
- Laserstrahlbearbeitung (Laserschneiden, Laserbohren),
- und chemischen Verfahren (Hirtisieren, Thermisch-chemisches Entgraten).

Das Form- und/oder Trockenmodul kann zwei zusammengehörige Halbschalen umfassen. Die beiden Halbschalen können zusammengehörige Schalenteile des Form- und/oder Trockenmoduls sein.

Die beiden Halbschalen können mittels eines Verschlussmechanismus' miteinander verbunden werden. Alternativ oder zusätzlich können die beiden Halbschalen an ihren äußeren Oberflächen Ösen umfassen, die für eine Schraubverbindung der Halbschalen vorgesehen sein können.

Das Herstellen des Form- und/oder Trockenmoduls mittels 3D-Druck kann derart erfolgen, dass das Form- und/oder Trockenmodul mehr als zwei zusammengehörige Schalenteile umfassen kann. Es können 3 bis 5 oder mehr zusammengehörige Schalenteile vorgesehen sein. Beispielsweise können die mehr als zwei zusammengehörigen Schalenteile einen Schalenteil für einen Boden, eine oder mehrere Schalenteile für einen Hals, einen oder mehrere Schalenteile für einen Neck und/oder einen oder mehrere Schaltenteile für einen Gewindebereich umfassen. Der eine oder die mehreren Schalenteile für den Gewindebereich können durch eine geeignete Porenausprägung und/oder Druckverlustführung für einen Feuchtigkeitsabzug von eingebrachter faserhaltiger Pulpe vorteilhaft ausgeprägt werden. Beispielsweise kann das Schalenteil für den Boden tassenförmig ausgebildet sein. Die tassenförmige Ausbildung kann eine Stütze für die Stützstruktur bilden und/oder als eine Halterung für einen Wechsel dienen.

Die mehr als zwei Schalenteile können mittels eines Verschlussmechanismus' miteinander verbunden werden. Alternativ oder zusätzlich können die Schalenteile an ihren äußeren Oberflächen Ösen umfassen, die für eine Schraubverbindung entsprechender zusammengehöriger Schalenteile vorgesehen sein können.

Ein Schalenteil kann dabei aus einem Teil bestehen oder mehrere Teile umfassen, die zusammengesetzt sein können. Die mehreren Teile können mittels eines Fügeverfahrens miteinander verbunden werden, beispielsweise mittels Schweißen. Als Verbindung zwischen den mehreren Einzelteilen können dann Schweißnähte vorgesehen sein.

Das Formmodul kann derart ausgebildet werden, dass es in ein Gehäuse einbringbar sein kann. Das Gehäuse kann einen äußeren Bereich des Formmoduls umschließen. Das Formmodul kann dadurch nach außen abgedichtet werden, wodurch überschüssiges Wasser aus einer faserhaltigen Pulpe, die in das Formmodul eingebracht wurde, abfließen kann. Für einen Anschwemmvorgang von Pulpe in das Formmodul kann dieses, eingebettet in das Gehäuse, beispielsweise kopfüber auf einer Zuführvorrichtung für die faserhaltige Pulpe angeordnet werden.

Das Herstellen des Form- und/oder Trockenmoduls kann ein Vorsehen von einer porösen Wandung oder mehreren porösen Wandungen des Form- und/oder Trockenmoduls umfassen. Bei mehreren Wandungen können benachbarte Wandungen jeweils miteinander verbunden sein. Eine der Wandungen kann eine Kavität des Form- und/oder Trockenmoduls umschließen, wobei eine innere Oberfläche dieser Wandung beim Herstellen des Fasern umfassenden Behälters mit einer äußeren Oberfläche des Behälters in Kontakt kommen kann.

Das Vorsehen kann derart erfolgen, dass eine an eine Kavität des Form- und/oder Trockenmoduls anschließende poröse Wandung eine innere Oberfläche mit einer Porosität mit einer Porengröße von 0,1 µm bis 50 µm oder mit einer Porengröße von 0,1 µm bis 500 µm umfassen kann. Die Bereichsgrenzen können miteingeschlossen sein. Beispielsweise kann das Vorsehen derart erfolgen, dass diese poröse Wandung eine Dicke von 1 µm bis 100 µm oder eine Dicke von 100 µm bis 50mm aufweisen kann. Die Bereichsgrenzen können miteingeschlossen sein. Die Porengröße kann eine glatte äußere Oberfläche eines herzustellenden Fasern umfassenden Behälters und dabei auch einen Transport von Wasser und/oder Wasserdampf weg vom herzustellenden Fasern umfassenden Behälter ermöglichen.

Das Vorsehen kann derart erfolgen, dass eine weitere poröse Wandung die an die Kavität des Form- und/oder Trockenmoduls anschließende poröse Wandung umgeben kann. Die weitere poröse Wandung kann die poröse Wandung dabei nur auf einer Außenseite der porösen Wandung umgeben, sodass die innere Oberfläche der porösen Wandung frei bleiben kann. Die weitere poröse Wandung kann eine Stützfunktion für die poröse Wandung aufweisen.

Das Vorsehen kann derart erfolgen, dass in der weiteren porösen Wandung Kanäle für Heizmedien und Kanäle zum Abführen von Wasser und/oder Wasserdampf vorgesehen sein können. Beispielsweise kann das Vorsehen derart erfolgen, dass in der an die Kavität des Form- und/oder Trockenmoduls anschließende poröse Wandung weitere Kanäle für Heizmedien und weitere Kanäle zum Abführen von Wasser und/oder Wasserdampf vorgesehen sein können. Beispielsweise kann das Vorsehen derart erfolgen, dass Öffnungen der weiteren Kanäle für Heizmedien und Öffnungen der weiteren Kanäle zum Abführen von Wasser und/oder Wasserdampf in der inneren Oberfläche vorgesehen sein können. Beispielsweise kann das Vorsehen derart erfolgen, dass die Kanäle für Heizmedien und die weiteren Kanäle für Heizmedien sowie die Kanäle zum Abführen von Wasser und/oder Wasserdampf und die weiteren Kanäle zum Abführen von Wasser und/oder Wasserdampf jeweils miteinander verbunden ausgebildet sein können.

Das Vorsehen kann derart erfolgen, dass die Kanäle für Heizmedien und/oder die Kanäle zum Abführen von Wasser und/oder Wasserdampf mittels des additiven Fertigungsverfahrens direkt in der weiteren porösen Wandung gefertigt werden können. Beispielsweise kann das Vorsehen derart erfolgen, dass die weiteren Kanäle für Heizmedien und/oder die weiteren Kanäle zum Abführen von Wasser und/oder Wasserdampf mittels des additiven Fertigungsverfahrens direkt in der porösen Wandung gefertigt werden können.

Das Vorsehen kann derart erfolgen, dass die Kanäle für Heizmedien und/oder die Kanäle zum Abführen von Wasser und/oder Wasserdampf und/oder die weiteren Kanäle für Heizmedien und/oder die weiteren Kanäle zum Abführen von Wasser und/oder Wasserdampf eine runde, ovale oder eckige Querschnittsfläche aufweisen können.

Beispielsweise kann das Vorsehen derart erfolgen, dass die Kanäle für Heizmedien und/oder die Kanäle zum Abführen von Wasser und/oder Wasserdampf und/oder die weiteren Kanäle für Heizmedien und/oder die weiteren Kanäle zum Abführen von Wasser und/oder Wasserdampf parallel oder senkrecht oder in einem Winkel zu einer Längsachse des Form- und/oder Trockenmoduls verlaufen können. Beispielsweise kann das Vorsehen derart erfolgen, dass ein Abstand der Kanäle für Heizmedien und/oder der Kanäle zum Abführen von Wasser und/oder Wasserdampf und/oder der weiteren Kanäle für Heizmedien und/oder der weiteren Kanäle zum Abführen von Wasser und/oder Wasserdampf 0,01 mm bis 100 mm betragen kann. Hierbei ist ein Abstand zwischen benachbarten Kanälen gemeint. Ein Abstand der oben genannten Kanäle zu einer Oberfläche der Form- und/oder Trockenmodule kann 0,01 mm bis 100 mm betragen. Die Bereichsgrenzen können jeweils miteingeschlossen sein.

Das Vorsehen kann derart erfolgen, dass die Kanäle für Heizmedien in einer ersten Wandschicht der weiteren porösen Wandung und die Kanäle zum Abführen von Wasser und/oder Wasserdampf in einer zweiten Wandschicht der weiteren porösen Wandung vorgesehen sein können. Beispielsweise kann das Vorsehen derart erfolgen, dass die weiteren Kanäle für Heizmedien in einer dritten Wandschicht der porösen Wandung und die weiteren Kanäle zum Abführen von Wasser und/oder Wasserdampf in einer vierten Wandschicht der porösen Wandung vorgesehen sein können.

Weiter ist eine Vorrichtung zum Ausführen des Verfahrens, wie oben oder weiter unten beschrieben, vorgesehen. Die Vorrichtung kann einen 3D-Drucker, eine Bereitstellung für zum 3D-Druck verwendetes Material und Dateninstruktionen, die das herzustellende Form- und/oder Trockenmodul beschreiben, umfassen.

Zudem ist ein Form- und/oder Trockenmodul hergestellt mittels des Verfahrens, wie oben oder weiter unten beschrieben, vorgesehen.

Zum Herstellen des Form- und/oder Trockenmoduls kann die Vorrichtung zum Ausführen des Verfahrens, wie oben oder weiter unten beschrieben, verwendet worden sein.

Weiter ist ein Verfahren zum Herstellen eines Fasern umfassenden Behälters unter Verwendung eines Form- und/oder Trockenmoduls vorgesehen, das mittels des Verfahrens, wie oben oder weiter unten beschrieben, hergestellt wurde.

In das Form- und/oder Trockenmodul kann eine faserhaltige Pulpe eingebracht werden, die beispielsweise durch Aufblasen eines elastischen Ballons an eine Innenseite des Form- und/oder Trockenmoduls gepresst werden kann, wodurch der Fasern umfassende Behälter ausgeformt werden kann. Eine an das Ausformen anschließende Trocknung des Fasern umfassenden Behälters kann vorgesehen sein.

Das Verfahren zum Herstellen eines Fasern umfassenden Behälters unter Verwendung eines Form- und/oder Trockenmoduls kann weiter ein Einbringen von faserhaltiger Pulpe in das Form- und/oder Trockenmodul, wobei beispielsweise das Form- und/oder Trockenmodul kopfüber auf einer Zuführvorrichtung für die faserhaltige Pulpe angeordnet sein kann, ein Ausüben eines Pressdrucks zum Ausformen des Fasern umfassenden Behälters, ein Trocknen des ausgeformten Fasern umfassenden Behälters und beispielsweise ein Ausbilden eines Gegendruckimpulses zum Auslösen des Fasern umfassenden Behälters aus dem Form- und/oder Trockenmodul umfassen. Diese Verfahrensschritte können erfolgen, wenn ein einziges Form- und/oder Trockenmodul verwendet vorgesehen ist, in dem erst ein Ausformen eines Fasern umfassenden Behälters und dann (im gleichen Modul) ein Trocknen des zuvor ausgeformten Fasern umfassenden Behälters erfolgen kann.

Alternativ kann das Verfahren zum Herstellen eines Fasern umfassenden Behälters unter Verwendung eines Form- und/oder Trockenmoduls kann weiter ein Einbringen von faserhaltiger Pulpe in das Formmodul, wobei beispielsweise das Formmodul kopfüber auf einer Zuführvorrichtung für die faserhaltige Pulpe angeordnet ist, ein Ausüben eines Pressdrucks zum Ausformen des Fasern umfassenden Behälters, beispielsweise ein Ausbilden eines Gegendruckimpulses zum Auslösen des ausgeformten, Fasern umfassenden Behälters aus dem Formmodul, ein Entnehmen des ausgeformten, Fasern umfassenden Behälters aus den Formmodul, ein Einbringen des ausgeformten, Fasern umfassenden Behälters in das Trockenmodul, ein Trocknen des ausgeformten Fasern umfassenden Behälters und beispielsweise Ausbilden eines Gegendruckimpulses zum Auslösen des Fasern umfassenden Behälters aus dem Form- und/oder Trockenmodul umfassen. Diese Verfahrensschritte können erfolgen, wenn ein Formmodul zum Ausformen eines Fasern umfassenden Behälters und ein Trockenmodul zum Trocknen des ausgeformten, Fasern umfassenden Behälters verwendet wird. Hierbei kann es sich um zwei Module handeln.

Weiter kann das Verfahren ein Einbringen von Heizmedium in die Kanäle für Heizmedien umfassen. Beispielsweise kann das Verfahren zudem ein Einbringen von Heizmedium in die weiteren Kanäle für Heizmedien umfassen (wenn diese weiteren Kanäle vorgesehen sind).

Zudem kann das Verfahren ein Abführen von Wasser und/oder Wasserdampf aus den Kanälen zum Abführen von Wasser und/oder Wasserdampf umfassen. Beispielsweise kann das Verfahren zudem ein Abführen von Wasser und/oder Wasserdampf aus den weiteren Kanäle zum Abführen von Wasser und/oder Wasserdampf umfassen (wenn diese weiteren Kanäle vorgesehen sind).

Zudem ist eine Vorrichtung zum Herstellen von Fasern umfassenden Behältern unter der Verwendung von faserhaltigen Pulpe vorgesehen, wobei die Vorrichtung ein oder mehrere Form- und/oder Trockenmodule, wie weiter oben oder weiter unten beschrieben, umfasst.

### Kurze Figurenbeschreibung

Die beigefügten Figuren stellen beispielhaft zum besseren Verständnis und zur Veranschaulichung Aspekte und/oder Ausführungsbeispiele der Erfindung dar. Es zeigt:
Figur 1 zwei Halbschalen, die mittels 3D-Druck hergestellt wurden,
Figur 2 die beiden zusammengesetzten Halbschalen,
Figur 3 eine Schnittdarstellung von den in einem Gehäuse angeordneten Halbschalen,
Figur 4A einen schematischen Längsschnitt durch ein Form- und/oder Trockenmodul,
Figur 4B eine erste Ausführungsform von Kanälen für Heizmedien und Kanälen zum Abführen von Wasser und/oder Wasserdampf des Form- und/oder Trockenmoduls,
Figur 4C eine zweite Ausführungsform von Kanälen für Heizmedien und Kanälen zum Abführen von Wasser und/oder Wasserdampf des Form- und/oder Trockenmoduls,
Figur 5A die zweite Ausführungsform von Kanälen für Heizmedien,
Figur 5B die erste Ausführungsform von Kanälen für Heizmedien und
Figur 5C eine dritte Ausführungsform von Kanälen für Heizmedien.

### Ausführliche Figurenbeschreibung

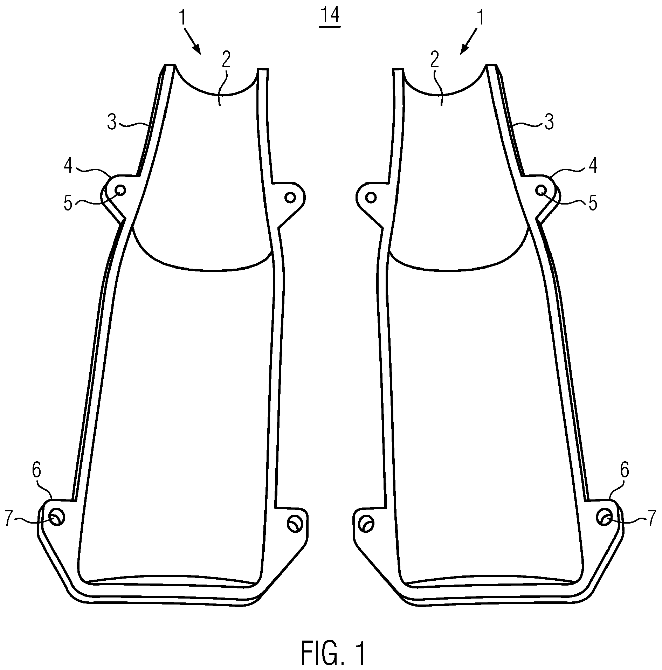

Die Figur 1 zeigt zwei Halbschalen 1 eines Form- und/oder Trockenmoduls 14, die mittels 3D-Druck hergestellt wurden. Die beiden Halbschalen 1 sind in der Darstellung gleich ausgebildet. Eine innere Oberfläche 2 der Halbschale 1 kann zum Anlagern von faserhaltiger Pulpe dienen. Um die im Herstellungsprozess eines Fasern umfassenden Behälters gepresste Pulpe (beispielsweise mittels eines aufblasbaren Ballons) einfach und sicher von der inneren Oberfläche 2 lösen zu können, kann eine Nachbearbeitung der inneren Oberfläche 2 nach dem Herstellen mittels des 3D-Drucks erfolgen. Die Nachbearbeitung kann ein Schleifen, Bürsten oder Honen umfassen. Detaillierter beschrieben, kann die Nachbearbeitung einen oder mehrere Punkte der folgenden Liste umfassen:
- Spanen mit geometrisch bestimmtem Schneiden (z. B. Drehen, Bohren, Fräsen),
- Spanen mit geometrisch unbestimmtem Schneiden (z. B. Schleifen, Honen, Läppen),
- thermischen Verfahren (z. B. Funkenerodieren (Drahterodieren, Senkerodieren),
- Laserstrahlbearbeitung (Laserschneiden, Laserbohren),
- und chemischen Verfahren (Hirtisieren, Thermisch-chemisches Entgraten).

Die Halbschale 1 kann Poren umfassen, wobei beispielsweise die Poren eine Porengröße von 0,1 µm bis 1 mm, beispielsweise von 0,3 mm bis 0,7 mm, aufweisen können, sodass aus einer faserhaltigen Pulpe ausgepresstes Wasser die Halbschale in Richtung einer äußeren Oberfläche 3 verlassen kann. Die Poren können während der Herstellung mittels des 3D-Drucks entstehen. Die Grenzwerte der angegebenen Wertebereiche können miteingeschlossen sein.

Die äußere Oberfläche 3 umfasst in einem Schulterbereich zwei erste Haltevorrichtungen 4 mit jeweils einer durchgehenden Bohrung 5, in die Schrauben zum mechanischen Verbinden der beiden dargestellten Halbschalen 1 einbringbar sein können. Zudem umfasst die äußere Oberfläche 3 in einem Körperbereich zwei erste Haltevorrichtungen 6 mit jeweils einer durchgehenden Bohrung 7, in die Schrauben zum mechanischen Verbinden der beiden dargestellten Halbschalen 1 einbringbar sein können.

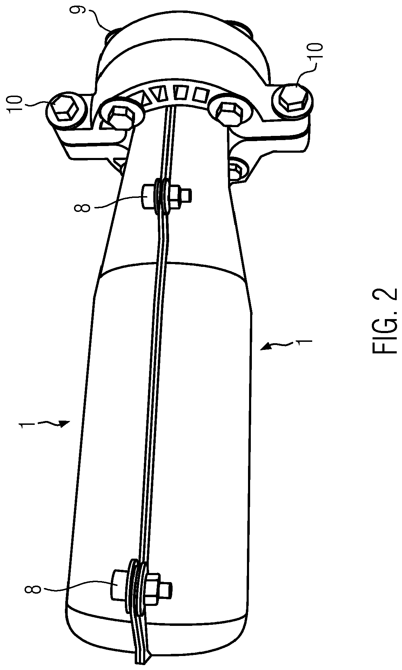

Die Figur 2 zeigt die beiden zusammengesetzten Halbschalen 1 aus der Figur 1. Die mechanische Verbindung der beiden Halbschalen 1 wurde hierbei durch Einbringen von Schrauben 8 in die durchgehenden Bohrungen 5, 7 erreicht. Im Mündungsbereich sind die beiden Halbschalen 1 von einer mittels Schrauben 10 verschraubten Klemmschelle 9 umgeben. Anstatt eine mechanische Verbindung mit Schrauben vorzusehen, kann auch ein Verschlussmechanismus verwendet werden, um die beiden Halbschalen zusammenzusetzen; die Haltevorrichtungen 4, 6 mit den durchgehenden Bohrungen 5, 7 an der äußeren Oberfläche sind dann nicht erforderlich.

Die beiden zusammengesetzten Halbschalen 1 können in einem Verfahren zum Herstellen eines Fasern umfassenden Behälters verwendet werden. Dazu kann faserhaltige Pulpe in das das Innere der Halbschalen eingebracht werden, sodass sich die Pulpe an der inneren Oberfläche 2 der Halbschalen 1 anlagern kann. Es kann ein elastischer Ballon in den zusammengesetzten Halbschalen 1 eingebracht und mit Druckluft aufgeblasen werden. Dadurch kann der elastische Ballon Druck auf die angelagerte Pulpe ausüben und sie zumindest teilweise zusammenpressen. Dabei kann zumindest ein Teil des in der Pulpe umfassten Wassers austreten. Durch das Ausüben des Drucks auf die Pulpe kann der Fasern umfassende Behälter in den zusammengesetzten Halbschalen 1 ausgeformt werden. Um den ausgeformten, Fasern umfassenden Behälter aus den Halbschalen 1 auszulösen bzw. von der inneren Oberfläche 2 der Halbschalen abzulösen, kann ein Gegendruckimpuls ausgebildet werden. Dazu können die Schrauben 8 und die Klemmschelle 9 gelöst werden, sodass die beiden Halbschalen 1 zumindest ein Stück voneinander getrennt werden können. Der Gegendruckimpuls kann von außerhalb der zusammengesetzten Halbschalen 1 ins Innere der Halbschalen 1 ausgerichtet sein.

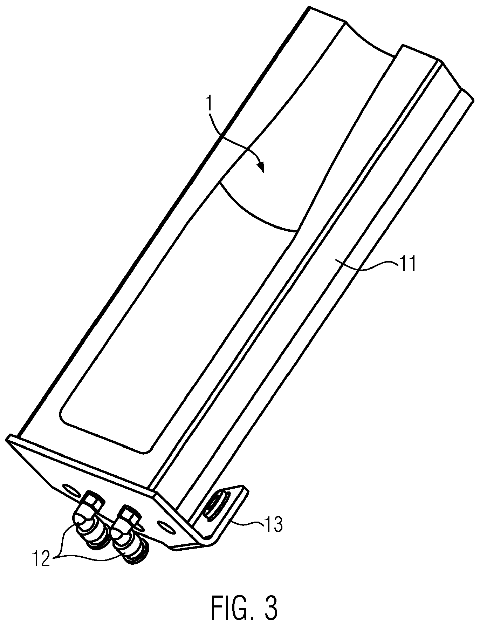

Die Figur 3 zeigt eine Schnittdarstellung von den in einem Gehäuse 11 angeordneten Halbschalen 1. Das Gehäuse 11 kann einen äußeren Bereich der Halbschalen 1 und somit des Form- und/oder Trockenmoduls 14 umschließen. Die Halbschalen 1 bzw. das Form- und/oder Trockenmodul 14 kann dadurch nach außen abgedichtet werden, wodurch überschüssiges Wasser aus einer faserhaltigen Pulpe, die in die Halbschalen 1 bzw. das Form- und/oder Trockenmodul 14eingebracht wurde, abfließen kann.

Das Gehäuse 11 umfasst hier beispielsweise zwei Wasserauslässe 12, über die das überschüssige Wasser, das beispielsweise beim Pressen der faserhaltigen Pulpe mittels eines aufblasbaren elastischen Ballons ausgepresst werden kann, abgeleitet werden kann. Beispielsweise kann ein Wasserauslass oder können mehr als zwei Wasserauslässe vom Gehäuse umfasst werden.

Zudem umfasst das Gehäuse 11 eine Halterung 13. Die Halterung 13 kann dafür vorgesehen sein, das Gehäuse 11 mit den darin Halbschalen in einer Vorrichtung zum Herstellen von Fasern umfassenden Behältern unter der Verwendung von faserhaltigen Pulpe anzuordnen.

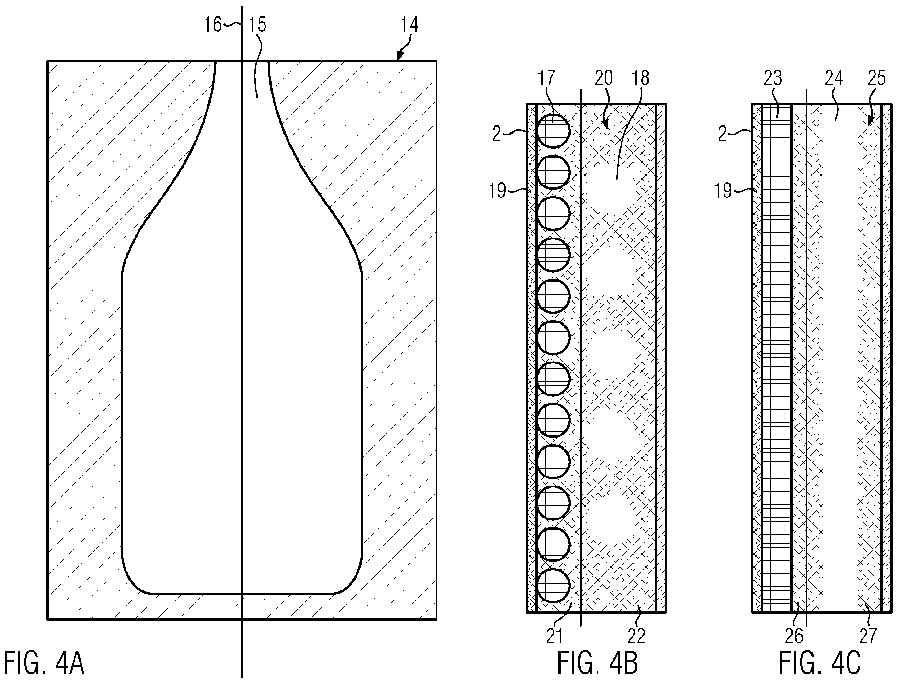

Die Figur 4A zeigt einen schematischen Längsschnitt entlang einer Längsachse 16 durch ein Form- und/oder Trockenmodul 14 mit einer Kavität 15 zur Aufnahme einer faserhaltigen Pulpe zum Herstellen eines Fasern umfassenden Behälters. Das Form- und/oder Trockenmodul 14 kann eine poröse Wandung oder mehrere poröse Wandungen umfassen, in der oder in denen Kanäle für Heizmedien und Kanäle zum Abführen von Wasser und/oder Wasserdampf vorgesehen sein können.

Die Figur 4B zeigt eine erste Ausführungsform von Kanälen 17 für Heizmedien und Kanälen 18 zum Abführen von Wasser und/oder Wasserdampf des Form- und/oder Trockenmoduls 14. Hier sind zwei Wandungen 19, 20 dargestellt. Die an die Kavität 15 des Form- und/oder Trockenmoduls 14 anschließende poröse Wandung 19 umfasst eine innere Oberfläche 2. Die innere Oberfläche 2 kann eine Porosität mit einer Porengröße von 0,1 µm bis 500 µm umfassen, wobei beispielsweise diese poröse Wandung 19 eine Dicke von 1 µm bis 50 mm aufweisen kann. Eine weitere poröse Wandung 20 umgibt die an die Kavität 15 des Form- und/oder Trockenmoduls 14 anschließende poröse Wandung 19. In der weiteren porösen Wandung 20 sind die zuvor erwähnten Kanäle 17 für Heizmedien und Kanäle 18 zum Abführen von Wasser und/oder Wasserdampf vorgesehen.

In der dargestellten ersten Ausführungsform verlaufen die Kanäle 17 für Heizmedien und die Kanäle 18 zum Abführen von Wasser und/oder Wasserdampf jeweils senkrecht zur Längsachse 16 des Form- und/oder Trockenmoduls 14.

Die Kanäle 17 für Heizmedien sind in einer ersten Wandschicht 21 der weiteren porösen Wandung 20 und die Kanäle 18 zum Abführen von Wasser und/oder Wasserdampf in einer zweiten Wandschicht 22 der weiteren porösen Wandung 20 vorgesehen. Das Abführen von Wasser und/oder Wasserdampf in den Kanälen 18 kann mittels Vakuum erfolgen. Das Vakuum kann einen absoluten Restdruck von 500 mbar bis 300 mbar oder 300 mbar bis 150 mbar aufweisen. Die Bereichsgrenzen können miteingeschlossen sein.

Figur 4C eine zweite Ausführungsform von Kanälen 23 für Heizmedien und Kanälen 24 zum Abführen von Wasser und/oder Wasserdampf des Form- und/oder Trockenmoduls 14. Hier sind zwei Wandungen 19, 25 dargestellt. Die an die Kavität 15 des Form- und/oder Trockenmoduls 14 anschließende poröse Wandung 19 umfasst die innere Oberfläche 2. Eine weitere poröse Wandung 25 umgibt die an die Kavität 15 des Form- und/oder Trockenmoduls 14 anschließende poröse Wandung 19. In der weiteren porösen Wandung 25 sind die zuvor erwähnten Kanäle 23 für Heizmedien und Kanäle 24 zum Abführen von Wasser und/oder Wasserdampf vorgesehen.

In der dargestellten zweiten Ausführungsform verlaufen die Kanäle 23 für Heizmedien und die Kanäle 24 zum Abführen von Wasser und/oder Wasserdampf jeweils parallel zur Längsachse 16 des Form- und/oder Trockenmoduls 14.

Die Kanäle 23 für Heizmedien sind in einer ersten Wandschicht 26 der weiteren porösen Wandung 25 und die Kanäle 24 zum Abführen von Wasser und/oder Wasserdampf in einer zweiten Wandschicht 27 der weiteren porösen Wandung 25 vorgesehen.

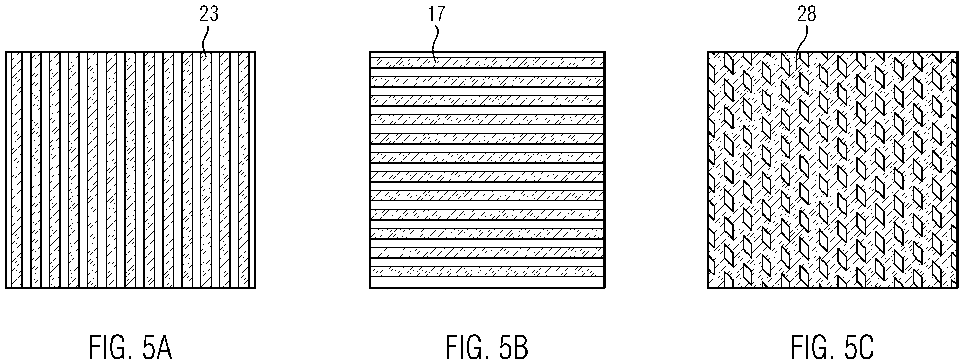

Die Figur 5A zeigt die zweite Ausführungsform von Kanälen 23 für Heizmedien, die parallel zur Längsachse 16 des Form- und/oder Trockenmoduls 14 verlaufen.

Die Figur 5B zeigt die erste Ausführungsform von Kanälen 17 für Heizmedien, die senkrecht zur Längsachse 16 des Form- und/oder Trockenmoduls 14 verlaufen.

Die Figur 5C zeigt eine dritte Ausführungsform von Kanälen 28 für Heizmedien, die gitterartig ausgebildet sind und in verschiedenen Winkeln zur Längsachse 16 des Form- und/oder Trockenmoduls 14 verlaufen.

## Patentansprüche

1. Verfahren zum Herstellen von Form- und/oder Trockenmodulen für die Herstellung von Fasern umfassenden Behältern mittels der Form- und/oder Trockenmodule, wobei das Verfahren umfasst:
- Herstellen eines Form- und/oder Trockenmoduls (14), wobei mindestens ein Teil des Form- und/oder Trockenmoduls mittels einem additiven Fertigungsverfahren, beispielsweise mittels 3D-Druck, hergestellt wird.

2. Das Verfahren nach Anspruch 1, wobei für den 3D-Druck ein Metall oder Metallgemisch verwendet wird, beispielsweise Stahl, Edelstahl oder Aluminium, oder wobei für den 3D-Druck ein Kunststoff verwendet wird.

3. Das Verfahren nach einem der Ansprüche 1 bis 2, wobei das Herstellen des Form- und/oder Trockenmoduls (14) mittels 3D-Druck derart erfolgt, dass das Form- und/oder Trockenmodul eine Anpressdruckbeständigkeit von 0,01 bar bis 10 bar oder bis 40 bar aufweist und/oder
wobei das Herstellen des Form- und/oder Trockenmoduls (14) mittels 3D-Druck derart erfolgt, dass das Form- und/oder Trockenmodul eine Temperaturbeständigkeit von mindestens 200°C oder mindestens 300°C aufweist und/oder
wobei das Herstellen des Form- und/oder Trockenmoduls (14) mittels 3D-Druck derart erfolgt, dass das Form- und/oder Trockenmodul Poren mit einer Porengröße von 0,1 µm bis 1 mm, beispielsweise von 0,3 mm bis 0,7 mm, aufweist.

4. Das Verfahren nach einem der Ansprüche 1 bis 3, weiter umfassend eine Nachbearbeitung einer inneren Oberfläche (2) des Form- und/oder Trockenmoduls (14) zum Glätten der inneren Oberfläche (2), wobei beispielsweise die Nachbearbeitung ein Schleifen, Bürsten, Honen, Beizen oder E-Polieren umfasst, wobei beispielsweise die Nachbearbeitung ein Spanen mit geometrisch bestimmtem Schneiden, ein Spanen mit geometrisch unbestimmtem Schneiden, ein oder mehrere thermische Verfahren, eine Laserstrahlbearbeitung und/oder ein oder mehrere chemische Verfahren umfasst.

5. Das Verfahren nach einem der Ansprüche 1 bis 4, wobei das Form- und/oder Trockenmodul (14) zwei zusammengehörige Halbschalen (1) umfasst oder wobei das Herstellen des Form- und/oder Trockenmoduls (14) mittels 3D-Druck derart erfolgt, dass das das Form- und/oder Trockenmodul (14) mehr als zwei zusammengehörige Schalenteile umfasst, wobei beispielsweise die mehr als zwei zusammengehörigen Schalen einen Schalenteil für einen Boden, eine oder mehrere Schalenteile für einen Hals, einen oder mehrere Schalenteile für einen Neck und/oder einen oder mehrere Schaltenteile für einen Gewindebereich umfassen, wobei beispielsweise das Schalenteil für den Boden tassenförmig ausgebildet ist.

6. Das Verfahren nach einem der Ansprüche 1 bis 5, wobei das Formmodul derart ausgebildet wird, dass es in ein Gehäuse (11) einbringbar sind.

7. Das Verfahren nach einem der Ansprüche 1 bis 6, wobei das Herstellen des Form- und/oder Trockenmoduls (14) ein Vorsehen von einer porösen Wandung oder mehreren porösen Wandungen des Form- und/oder Trockenmoduls (14) umfasst.

8. Das Verfahren nach Anspruch 7, wobei das Vorsehen derart erfolgt, dass eine an eine Kavität des Form- und/oder Trockenmoduls (14) anschließende poröse Wandung eine innere Oberfläche (2) mit einer Porosität mit einer Porengröße von 0,1 µm bis 50 µm oder mit einer Porengröße von 0,1 µm bis 500 µm umfasst, dass beispielsweise diese poröse Wandung eine Dicke von 1 µm bis 100 µm aufweist, dass beispielsweise diese poröse Wandung eine Dicke von 100 µm bis 50mm aufweist.

9. Das Verfahren nach Anspruch 7, wobei das Vorsehen derart erfolgt, dass eine weitere poröse Wandung die an die Kavität des Form- und/oder Trockenmoduls (14) anschließende poröse Wandung umgibt, wobei beispielsweise das Vorsehen derart erfolgt, dass in der weiteren porösen Wandung Kanäle für Heizmedien und Kanäle zum Abführen von Wasser und/oder Wasserdampf vorgesehen sind,
wobei beispielsweise in der an die Kavität des Form- und/oder Trockenmoduls (14) anschließende poröse Wandung weitere Kanäle für Heizmedien und weitere Kanäle zum Abführen von Wasser und/oder Wasserdampf vorgesehen sind, wobei beispielsweise Öffnungen der weiteren Kanäle für Heizmedien und Öffnungen der weiteren Kanäle zum Abführen von Wasser und/oder Wasserdampf in der inneren Oberfläche (2) vorgesehen sind, wobei beispielsweise die Kanäle für Heizmedien und die weiteren Kanäle für Heizmedien sowie die Kanäle zum Abführen von Wasser und/oder Wasserdampf und die weiteren Kanäle zum Abführen von Wasser und/oder Wasserdampf jeweils miteinander verbunden ausgebildet sind,
wobei beispielsweise das Vorsehen derart erfolgt, dass die Kanäle für Heizmedien und/oder die Kanäle zum Abführen von Wasser und/oder Wasserdampf mittels des additiven Fertigungsverfahrens direkt in der weiteren porösen Wandung gefertigt werden, dass beispielsweise die weiteren Kanäle für Heizmedien und/oder die weiteren Kanäle zum Abführen von Wasser und/oder Wasserdampf mittels des additiven Fertigungsverfahrens direkt in der porösen Wandung gefertigt werden,
wobei beispielsweise das Vorsehen derart erfolgt, dass die Kanäle für Heizmedien und/oder die Kanäle zum Abführen von Wasser und/oder Wasserdampf und/oder die weiteren Kanäle für Heizmedien und/oder die weiteren Kanäle zum Abführen von Wasser und/oder Wasserdampf eine runde, ovale oder eckige Querschnittsfläche aufweisen, dass beispielsweise die Kanäle für Heizmedien und/oder die Kanäle zum Abführen von Wasser und/oder Wasserdampf und/oder die weiteren Kanäle für Heizmedien und/oder die weiteren Kanäle zum Abführen von Wasser und/oder Wasserdampf parallel oder senkrecht oder in einem Winkel zu einer Längsachse (16) des Form- und/oder Trockenmoduls (14) verlaufen, dass ein Abstand der Kanäle für Heizmedien und/oder der Kanäle zum Abführen von Wasser und/oder Wasserdampf und/oder der weiteren Kanäle für Heizmedien und/oder der weiteren Kanäle zum Abführen von Wasser und/oder Wasserdampf 1 mm bis 5 mm beträgt,
wobei beispielsweise das Vorsehen derart erfolgt, dass die Kanäle für Heizmedien in einer ersten Wandschicht der weiteren porösen Wandung und die Kanäle zum Abführen von Wasser und/oder Wasserdampf in einer zweiten Wandschicht der weiteren porösen Wandung vorgesehen sind, dass beispielsweise die weiteren Kanäle für Heizmedien in einer dritten Wandschicht der porösen Wandung und die weiteren Kanäle zum Abführen von Wasser und/oder Wasserdampf in einer vierten Wandschicht der porösen Wandung vorgesehen sind.

10. Vorrichtung zum Ausführen des Verfahrens nach einem der Ansprüche 1 bis 9.

11. Form- und/oder Trockenmodul hergestellt mittels des Verfahrens nach einem der Ansprüche 1 bis 9, wobei beispielsweise zum Herstellen die Vorrichtung nach Anspruch 10 verwendet wurde.

12. Verfahren zum Herstellen eines Fasern umfassenden Behälters unter Verwendung eines Form- und/oder Trockenmoduls (14), das mittels des Verfahrens nach einem der Ansprüche 1 bis 9 hergestellt wurde.

13. Das Verfahren nach Anspruch 12, wobei das Verfahren weiter umfasst:
- Einbringen von faserhaltiger Pulpe in das Form- und/oder Trockenmodul, wobei beispielsweise das Form- und/oder Trockenmodul kopfüber auf einer Zuführvorrichtung für die faserhaltige Pulpe angeordnet ist,
- Ausüben eines Pressdrucks zum Ausformen des Fasern umfassenden Behälters,
- Trocknen des ausgeformten Fasern umfassenden Behälters,
- beispielsweise Ausbilden eines Gegendruckimpulses zum Auslösen des Fasern umfassenden Behälters aus dem Form- und/oder Trockenmodul
oder
- Einbringen von faserhaltiger Pulpe in das Formmodul, wobei beispielsweise das Formmodul kopfüber auf einer Zuführvorrichtung für die faserhaltige Pulpe angeordnet ist,
- Ausüben eines Pressdrucks zum Ausformen des Fasern umfassenden Behälters,
- beispielsweise Ausbilden eines Gegendruckimpulses zum Auslösen des ausgeformten, Fasern umfassenden Behälters aus dem Formmodul,
- Entnehmen des ausgeformten, Fasern umfassenden Behälters aus den Formmodul,
- Einbringen des ausgeformten, Fasern umfassenden Behälters in das Trockenmodul,
- Trocknen des ausgeformten Fasern umfassenden Behälters,
- beispielsweise Ausbilden eines Gegendruckimpulses zum Auslösen des Fasern umfassenden Behälters aus dem Form- und/oder Trockenmodul.

14. Das Verfahren nach Anspruch 12 oder 13, wobei das Verfahren weiter umfasst:
- Einbringen von Heizmedium in die Kanäle für Heizmedien, beispielsweise Einbringen von Heizmedium in die weiteren Kanäle für Heizmedien,
- Abführen von Wasser und/oder Wasserdampf aus den Kanälen zum Abführen von Wasser und/oder Wasserdampf, beispielsweise Abführen von Wasser und/oder Wasserdampf aus den weiteren Kanäle zum Abführen von Wasser und/oder Wasserdampf.

15. Vorrichtung zum Herstellen von Fasern umfassenden Behältern unter der Verwendung von faserhaltigen Pulpe, wobei die Vorrichtung ein oder mehrere Form- und/oder Trockenmodule (14) nach Anspruch 11 umfasst.
